# EUROPEAN PATENT SPECIFICATION

(11) **EP 2 105 579 B1**
(45) Date of publication and mention of the grant of the patent: **06.11.2013**
(21) Application number: 09250356.4
(22) Date of filing: 12.02.2009
(51) Int. Cl.: F01D 5/14, F01D 5/28

(54) **An article formed from a composite material**
Aus einem Verbundmaterial gebildeter Artikel
Article formé à partir d'un matériau composite

(30) Priority: 28.03.2008 GB 0805604
(43) Date of publication of application: 30.09.2009
(73) Proprietor: Rolls-Royce plc, London SW1E 6AT (GB)
(72) Inventor: Backhouse, Robert Charles, West Sussex GU28 9HW (GB)
(74) Representative: Barcock, Ruth Anita

(56) References cited:
- EP-A1- 1 681 439
- GB-A- 1 291 718
- US-A- 5 876 659
- US-A1- 2004 145 079

## Description

This invention relates to an article formed from a composite material, and is particularly, although not exclusively, concerned with such an article in the form of an aerofoil component such as a fan blade of a turbofan engine, turbo prop, ducted fans and other such turbomachinery.

Fan blades, particularly those of turbofan engines, turbo props, ducted fans and other such turbomachinery are subjected to significant forces in operation. Such blades must be capable of withstanding not only centrifugal forces and forces generated by the movement of air, but also forces arising from impact by foreign objects, such as birds. Furthermore, if minor damage occurs as a result of foreign object impact, it is important that the damage does not propagate through the blade during continued operation as to diminish its structural and functional integrity.

Composite fan blades are currently manufactured using highly toughened thermosetting epoxy resin pre-impregnated materials which are laid up in a predetermined stacking sequence to ensure careful distribution of ply terminations in order to achieve the required damage tolerance. It is important that ply terminations (ie cut fibre ends) are not concentrated in a single area or plane, since they represent locations of potential weakness in the blade.

Such manufacturing processes are expensive because the materials are costly, deposition rates are slow and there are stringent quality assurance requirements.

US5876659 (YASUTOMI ET AL) describes a component which comprises a fibre bundle 4, where each fibre bundle (4) comprises a number of inorganic fibres (2) in a medium (3). The fibre bundles (4) are held in, and spaced apart by, a matrix (1).

According to the present invention there is provided an aerofoil component formed from a composite material, the article comprising abutting core components, wherein at least one of the core components comprises a pack of reinforcement rods disposed parallel to each other and embedded in a resin matrix, each rod comprising a resin-bonded bundle of reinforcement fibres, characterised in that each core component is wrapped in a fibre wrapping (12) to form a web (38) disposed between adjacent core components.

The rods may have a circular cross-section, although other shapes such as square may be used. The rods may have a transverse dimension (diameter or equivalent) which is not less than 1.5mm and not more than 3.5mm. The reinforcement fibres may be carbon fibres which run parallel to the rod length.

The resin matrix may be a cured syntactic material, a tough adhesive composition or a composite bulk-moulding compound.

The pack may be one of a plurality of packs forming the article. The or each pack may comprise not less than 100 reinforcement rods. The packs may be overwrapped by braiding or reinforcement fabric. Each individual reinforcement rod may have an overwinding of reinforcing fibres in a resin matrix.

Each rod may comprise a main body provided with spacing projections so that, in the pack, the main bodies of the respective rods are spaced apart from each other by contact between the projections of adjacent rods or by a projection on one rod and the main body of an adjacent rod. The projections may have a spiral form about the longitudinal axis of the rod and may be a separate winding, for example of wire, or an integral formation on the main body.

In one embodiment in accordance with the present invention, the rods extend substantially parallel to a lengthwise direction of the article.

The article may have an outer skin which encloses the or each pack of reinforcement rods. The outer skin may comprise reinforcement fibres in a resin matrix. The reinforcement fibres of the outer skin may disposed in fabric layers, for example in a multiaxial warp knit fabric (non-crimp fabric), with each fabric layer comprising fibres extending in different orientations. For example, some of the fibres may extend at 90° to the lengthwise directions of the respective rods, and other fibres may extend at angles between 30° and 60° to the lengthwise direction of the rods. In one embodiment, the multiaxial warp knit fabric has fibres extending at +45°/90°/-45° with respect to the rods.

The area weight in the fabric of the 90° fibres may vary in the lengthwise direction of the rods.

The outer skin may comprise separate preforms made up of stacked layers of the fabric, which layers are bonded to one another to form the preform.

The article may be a component of a gas turbine engine, and in particular may be an aerofoil component such as a fan blade of a turbofan engine.

Another aspect of the present invention provides a method of manufacturing an article of composite material, the method comprising:
assembling a plurality of reinforcement rods into a pack in which the rods are parallel to each other, each rod comprising a resin-bonded bundle of reinforcement fibres;
impregnating the pack with a first settable or curable composition, and causing or allowing the composition to set or cure to form a resin matrix in which the rods are embedded;
providing a fibre wrapping around the pack to form a core component;
assembling a core of the article, the core including abutting core components;
assembling a fibre reinforcement over the core;
placing the core with the assembled fibre reinforcement in a mould corresponding to the desired shape of the article; and
admitting a second settable or curable composition into the mould and causing or allowing the second composition to set or cure between the core components to thereby form a web between adjacent core components.

In an embodiment of a method as defined above, the fibre reinforcement comprises a plurality of preforms, each preform being made up of reinforcing fabric layers.

For a better understanding of the present invention, and to show more clearly how it may be carried into effect reference will now be made, by way of example, to the accompanying drawings, in which:
Figure 1 diagrammatically represents the formation of rod packs and assembly of the rod packs to form a core of a fan blade;
Figure 2 is a sectional view of a rod of the rod packs;
Figure 3 diagrammatically represents a reinforcement fabric for forming an outer skin of the fan blade;
Figure 4 shows outer skin preforms formed from the fabric of Figure 3, in conjunction with the core represented in Figure 1;
Figure 5 shows a completed fan blade; and
Figure 6 shows an alternative core structure.

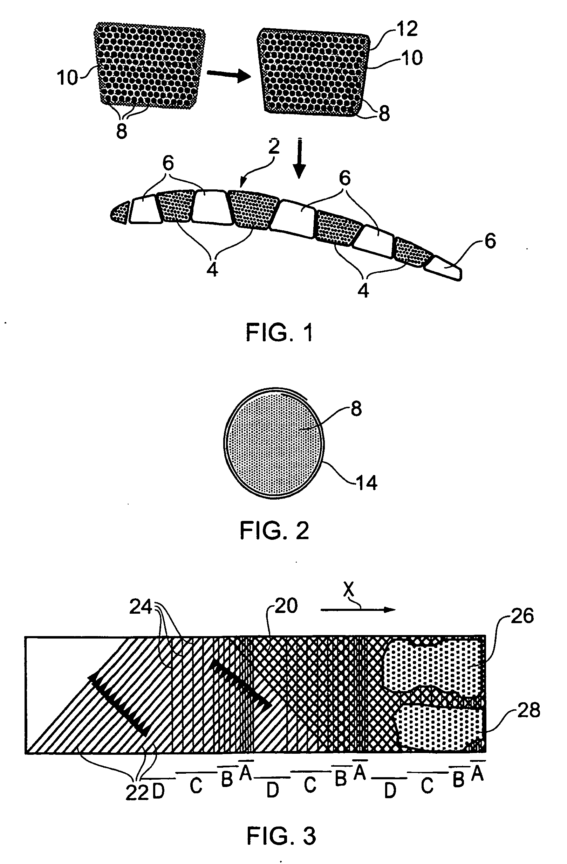

As shown in Figure 1, a core 2 of a fan blade for a turbofan engine is assembled from core components 4, 6. Each core component extends spanwise of the fan blade, and is preferably parallel to the line of action of centrifugal force acting on the blade when mounted on a rotating rotor.

As shown in Figure 1, the components 4, 6 are of two kinds. The first kind of component comprises a pack 4 made up of a plurality of reinforcing rods 8 embedded in a resin matrix 10. These packs are manufactured from small diameter composite rods, having a circular cross-section with a diameter in the range 1.5 - 3.5mm, and there may be 100 or more of the rods 8 in each pack 4. The rods may comprise high strength or intermediate modulus carbon fibres. The rods are cut to length (substantially the length of the finished fan blade) and embedded in a resin matrix. The matrix may comprise a curable syntactic paste or tough adhesive in which the rods may be embedded by vacuum casting. Alternatively, the rods may be embedded in a composite moulding compound in a compression moulding or injection moulding process. It will be appreciated from Figure 1 that the cross-sectional shape of the pack has a generally quadrilateral form, of which two opposite faces are shaped to conform to the pressure and suction surfaces of the fan blade. The other two faces are oriented to provide webs between the pressure and suction surfaces of the fan blade, as will be described below.

After forming of the rod assemblies in the resin matrix, the assemblies are individually overbraided with a biaxial or triaxial overbraiding material, or are wrapped in reinforcement fabric 12.

The overbraided or overwrapped rod packs are then assembled together, and with the other components 6, to form the core 2. The other components 6 may be unreinforced mouldings formed from the resin used for the matrix of the rod packs 4, for example a cured syntactic paste. Alternatively, they may be made from different materials, or they may be replaced by further rod packs 4. Thus in one embodiment, all of the components of the core 2 may be rod packs 4.

The rods 8 themselves, as shown in Figure 2, may be individually overwrapped by a suitable reinforcing material. For example they may be overwound under tension with pre-impregnated reinforcing fibres 14 which are subsequently cured. The purpose of overwinding is to suppress separation of the individual fibres of the rod under transverse tension occurring as a result of impact, axial loading or crack growth. The rods 8 themselves may be made from carbon fibres in a pultrusion process, and the overwinding may be carried out after pultrusion in a semi-continuous or batch process.

Furthermore, the rods 8 may be additionally overwound or moulded with a wire or thread (not shown) in a spiral fashion to provide spacing projections which engage the corresponding projections, or main bodies, of adjacent rods in order to maintain a spacing between the main bodies of the rods to allow penetration of the resin matrix material during manufacture of the packs 4.

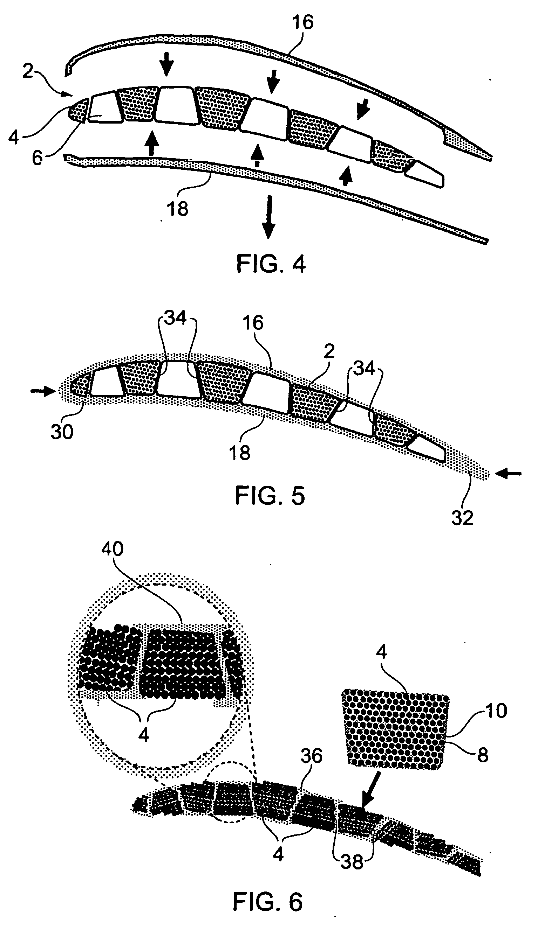

In one embodiment the core 2 shown in Figure 1 is provided with an outer skin to form the finished article. The outer skin may be formed by direct wrapping of the core by a suitable reinforcing material, but in one embodiment the skin is made up of two preforms 16,18 as shown in Figure 4. The preforms 16,18 are made by laying up layers of a reinforcing fabric which are then pre-compressed to create the handleable preforms 16, 18 shown in Figure 4. In order to maintain the integrity of the preforms 16, 18, a suitable heat or pressure activated thermoplastic web or powder binder may be disposed between each pair of adjacent layers to bond the layers together when subjected to pressure or heat.

The preforms 16, 18 may be made from a multi-axial warp knit fabric/non-crimp fabric as diagrammatically represented in Figure 3. In the embodiment shown in Figure 3, the fabric comprises three plies of fibres, which may be carbon fibres oriented in different directions. In an alternative embodiment the fabric may comprise more than three plies of fibres. The plies of fibres are interconnected by stitching which is not shown in Figure 3 so as to make the fabric handleable. In the fabric shown in Figure 3, there are two outer plies 20, 22 extending respectively at +45° and -45° to the warp direction (indicated by an arrow X). There is a further ply 24 of fibres which are disposed at 90° to the warp direction X.

As diagrammatically indicated in Figure 3, the area density of the 90° fibres varies along the warp direction. In Figure 3, stepwise area density changes are represented by regions A, B, C and D, with the area density being highest in region A and lowest region D. Alternatively the area density may change gradually. It will be appreciated that the regions A to D are repeated along the warp direction X. In practice, the fabric is supplied in rolls, the length shown in Figure 3 being only a small part of a complete roll-supplied web.

Two cut-outs 26, 28 are represented in Figure 3, extending over a single length of the fabric embracing a single set of regions A to D. The cut-outs 26, 28 represent pieces to be used in the lay-up of the preforms 16, 18, and their lengthwise direction (in the warp direction X) is coincident with the spanwise direction of the finished fan blade. The 90° fibres 24 thus extend chordwise of the finished blade. The shapes are cut, for example by laser cutting or ultrasonic cutting, under CNC control and deposited successively onto preform tooling in one axis of laminating, so minimising manual handling. In this construction method, the ply drop-offs (cut fibre terminations) would be of one fabric thickness. In the finished product, failure of the article by cracking is most likely to occur in the layer of 90° fibres. In the fabric shown in Figure 3, the 90° fibres are disposed between the + 45° and -45° fibres 20, 22, and so fibre terminations along the span are mainly at ±45°, with the 90° fibre terminations being disposed within the textile reinforcement. Also, because the area density of 90° fibres decreases in the direction from the region A to the region D, relatively few 90° ply drop-offs are present at least in the regions C and D.

Because the skin formed from the preforms 16, 18 contains only + 45° and - 45° fibre orientations, the tensile and compressive strain allowable in the spanwise direction of the finished blade can be expected to be relatively high, for example approximately 0.6%.

To avoid stress differentials in the lay-up of the preforms 16, it is desirable for differently "handed" fabrics to be supplied for cutting-out of the pieces 26, 28. Thus, on one side of the central plane of each preform 16, 18, a left-handed fabric is laid-up, and on the other side of the central plane a right-handed fabric is laid-up. The terms left-handed and right-handed are used for convenience to distinguish the two different fabrics. It will be appreciated that if a fabric is constructed in which the lower ply is at +45° to the warp direction X, and the upper ply is at -45° to the warp direction X, this relationship will remain even if the fabric is turned over. In other words, it is not possible to lay-up the fabric so that the lower ply is at - 45° to the warp direction. Consequently, the use of matched left and right handed pairs of fabrics as described above provides a balanced symmetric lay-up within the preform 16,18.

Once the preforms have been made, they are placed on opposite sides of the core 2, as shown in Figure 4, and the resulting assembly is placed in a resin transfer moulding (RTM) mould. Resin is then injected into the mould to impregnate the preforms 16, 18 and the overbraiding or overwrapping 12 of the individual components 4, 6. The mould has an internal cavity having a shape corresponding to the desired shape of the final fan blade. Resin is injected into the mould cavity to impregnate the preforms 16, 18 and the overbraiding or overwrapping 12 of the components 4, 6 of the core 2. The resin is caused or allowed to cure, after which the finished moulding is removed from the mould and any secondary machining operations, for example to remove flash, to form the root region of the blade or to prepare the blade for attachment of other components, such as leading or trailing edge impact and erosion surfaces, as indicated at 30 and 32 in Figure 5.

If desired, stitching or tufting may be applied after RTM moulding, in order to secure the outer skin to the core 2 to enhance damage tolerance. In this process, a single needle and reinforcement thread of carbon fibre, glass fibre or aramid/para-aramid are pushed through the skin into the core 2. The friction between the thread and the skin holds the thread in place as the needle is withdrawn, forming a loop or tuft bridging the skin and core 2.

In the finished fan blade represented in Figure 5, the rods 8 which support centrifugal forces applied to the blade are disposed internally of the blade and so are protected from impact damage by the skin formed by the preforms 16, 18. Also, because the packs 4 are made up of the closely packed rods 8, rather than a laminar arrangement of reinforcing fabrics, damage extending into the core 2 cannot easily propagate through the core 2 because there are no straight "runs" between adjacent rods 8. This is in contrast to a traditionally laid-up blade using fabric reinforcements where cracks can propagate between adjacent layers of the fabric.

Furthermore, the tough matrix 10 within the which the rods 8 are embedded is effective in transferring loads between adjacent rods, while accepting relatively high strain without failure.

The resin forming the matrix 10 can be selected or formulated to provide desired damping characteristics in the structure. The material may be a syntactic gap filling polyurethane or epoxy paste, or a syntactic film such as may be used in the manufacture of honeycombed sandwich panel composites for the purpose of stabilising or joining core materials. The material may also be of thermoplastic composition.

As an alternative to using such a material, the packs 4 may be formed by compression moulding the rods 8 within a bulk moulding compound containing chopped fibre, so creating a quasi-homogenous composite matrix surrounding the rods 8. The chopped fibre may be glass, carbon or a hybrid of the two. The matrix resin is preferably compatible with the rods 8 themselves. A suitable material is available under the name HexMC®, available from Hexcel Corporation of Stamford, Connecticut, USA.

In the blade shown in Figure 5 the components 4, 6 are generally trapezoidal in cross-sectional shape and run generally parallel to the span-wise direction of the blade, so they are oriented in line with the primary axial centrifugal force load. At the junctions of adjacent components 4, 6 the abutting regions of the overwinding 12, impregnated with the cured resin introduced during the RTM process forms webs 34 which provide a shear connection between the pressure and suction surfaces of the fan blade. The overwinding 12 of the packs 4, 6 may be made up of a substantially ±45° fabric wrap, braided sock or overbraid formed directly on the pack. In other embodiments, it may be desirable for the overwinding to have fibres in three orientations, for example ±45° 0° so as to blend the stiffness between the rods (at 0°) and the ±45°, 90° skins formed from the preforms 16, 18. In the process described above, the overwindings are applied in dry form to be impregnated during the RTM process, but alternatively they may be formed from pre-impregnated material.

The skins formed from the preforms 16, 18, with the ±45°, 90° fibre reinforcements, provide flutter resistance and torsional stiffness to the component. While the process described above refers to the preforms 16, 18 being applied in dry form (apart from the heat or pressure sensitive bonding material between the fabric layers), it is possible for these skins to be formed by other processes for example pre-preg lay-up or overbraiding.

When the skin is formed from preforms 16, 18 as described in Figure 4, the preforms are preferably compressed, before application to the core 2, to substantially their final thickness, or at least to a thickness not more than 10% above the final moulded thickness in the finished fan blade.

In an alternative embodiment, as shown in Figure 6, all of the components of the core comprise rod packs 4. The packs 4 are not overwound as described with reference to Figure 1, but are instead compression moulded together to form the core 2 along with a chopped pre-preg sheet moulding compound, or similar material. Thus, the rod packs 4 are assembled together with such a sheet moulding compound 36 which is deflected alternately around adjacent packs 4. The sheet moulding compound 36 thus forms shear webs extending across the core, to provide a shear connection between the pressure and suction sides of the finished blade.

As in the embodiment shown in Figures 4 and 5, the core 2 shown in Figure 6 may be provided with a skin, either formed from preforms 16, 18 as shown in Figure 4, or in any alternative manner. For example, the preforms 16, 18 could be made from a chopped pre-preg moulding compound. After assembly of the preforms 16, 18 with the core 2 the assembly would be subjected to a final compression moulding step which would integrate the skin with the webs 38 formed by the bulk moulding compound between adjacent rod packs 4.

As shown in Figure 6, outwardly facing surfaces of the sheet moulding compound which, with the rod packs 4, form the core 2 may be provided with small projections 40 of defined height. These projections serve, during the compression moulding step, to centre the core within the mould so as to establish a required thickness of the moulding compound applied over the core 2 to form the skin of the fan blade. This measure would thus prevent the thickness of each skin from falling below a minimum value during the compression moulding step.

While the unnotched in-plane properties of chopped pre-preg compression moulding compounds may be inferior to those of conventional continuous fibre quasi-isotropic laminates as described above with reference to Figures 3 and 4, the notched tensile and compression properties are similar.

Of course, the core 2 shown in Figure 6 could have an outer skin applied to it by use of compressed preforms of multi-axial warp knit fabric as described above with reference to Figures 3 and 4, in which case the protrusions 40 would also provide thickness control between the skin of the fan blade and the web structure constituted by the moulding compound 36.

Although the fabric shown in Figure 3 is referred to as being formed from carbon fibres it will be appreciated that other suitable fibre reinforcement materials may be used. For example, S-glass fibre available from Owens-Corning of Toledo, Ohio, USA, or other high-strength fibres may be used. A more conventional broadly isotropic lay-up construction may be used to achieve an adequate level of damage tolerance.

Although the present invention has been described in connection with the manufacture of a fan blade for a turbofan engine, it will be appreciated that other articles could be manufactured in the same manner. For example, blades for open-rotor and propeller structures (for example turbo prop, ducted fans and other such turbomachinery) could be manufactured by the processes described with reference to Figures 1 to 6. For such articles, and similar articles with relatively slender and deep sections, may have an outer skin formed using a biaxial/triaxial braided reinforcement over a core comprising or including reinforcement rods 8 in a resin matrix.

The manufacturing process may also be suitable for static aerofoil structures.

## Claims

1. An aerofoil component formed from a composite material, the article comprising abutting core components (4,6), wherein at least one of the core components (4) comprises a pack of reinforcement rods (8) disposed parallel to each other and embedded in a resin matrix (10), each rod (8) comprising a resin-bonded bundle of reinforcement fibres, **characterised in that** each core component is wrapped in a fibre wrapping (12) to form a web (38) disposed between adjacent core components.

2. An aerofoil component as claimed in claim 1, in which the cross-section of each rod (8) has a transverse dimension which is not less than 1.5mm and not more than 3.5mm.

3. An aerofoil component as claimed in claim 1 or claim 2 in which the reinforcement fibres comprise carbon fibres.

4. An aerofoil component as claimed in any one of the preceding claims, in which the resin matrix (10) comprises a cured syntactic material.

5. An aerofoil component as claimed in any one of the preceding claims, in which the or each pack (4) comprises not less than 100 of the reinforcement rods (8).

6. An aerofoil component as claimed in any one of the preceding claims, in which each reinforcement rod (8) is provided with an overwinding (12) of reinforcing fibres in a resin matrix.

7. An aerofoil component as claimed in any one of the preceding claims, in which each reinforcing rod (8) comprises a main body having a spacing projection for spacing the main bodies of adjacent rods (8) from one another.

8. An aerofoil component as claimed in claim 7, in which the projection is of spiral form about the longitudinal axis of the respective rod (8).

9. An aerofoil component as claimed in any one of the preceding claims, in which the rod pack (4) or packs (4,6) constitute a core (2) of the article which is provided with an outer layer enclosing the core (2).

10. An aerofoil component as claimed in claim 9, in which the outer layer comprises reinforcement fibres in a resin matrix.

11. An aerofoil component as claimed in claim 10, in which the fibres are disposed in fabric layers.

12. An aerofoil component as claimed in claim 11, in which each fabric layer comprises a multi-axial warp knit fabric.

13. An aerofoil component as claimed in claim 12, in which the multi-axial warp knit fabric comprises fibres oriented at +45°/90°/-45°with respect to the lengths of the rods.

14. An aerofoil component as claimed in claim 13, in which the area weight of the fibres oriented at 90°varies in the lengthwise direction of the rods.

15. A method of manufacturing an article of composite material, the method comprising:
assembling a plurality of reinforcement rods (8) into a pack (4) in which the rods (8) are parallel to each other, each rod (8) comprising a resin-bonded bundle of reinforcement fibres;
impregnating the pack with a first settable or curable composition, and causing or allowing the composition to set or cure to form a resin matrix (10) in which the rods (8) are embedded;
providing a fibre wrapping around the pack to form a core component (4);
assembling a core (2) of the article, the core including abutting core components (4,6);
assembling a fibre reinforcement over the core (2);
placing the core (2) with the assembled fibre reinforcement in a mould corresponding to the desired shape of the article; and
admitting a second settable or curable composition into the mould and causing or allowing the second composition to set or cure between the core components to thereby form a web between adjacent core components.

## Patentansprüche

1. Aus einem Kompositmaterial hergestellte Schaufelblattkomponente, wobei der Gegenstand aneinander stoßende Kernkomponenten (4, 6) aufweist, wovon mindestens eine der Kernkomponenten (4) ein Paket von Verstärkungsstäben (8) enthält, die zueinander parallel angeordnet und in einer Harzmatrix (10) eingebettet sind, wobei jeder Stab (8) ein harzgebundenes Bündel aus Verstärkungsfasern umfasst, **dadurch gekennzeichnet**, das jede Kernkomponente von einem Fasermantel (12) ummantelt ist, um einen Steg (38) zu bilden, der zwischen benachbarten Kernkomponenten angeordnet ist.

2. Schaufelblattkomponente nach Anspruch 1, wobei der Querschnitt jeden Stabs (8) eine Querabmessung hat, die nicht weniger als 1,5 mm und nicht mehr als 3,5 mm beträgt.

3. Schaufelblattkomponente nach Anspruch 1 oder Anspruch 2, wobei die Verstärkungsfasern Kohlefasern umfassen.

4. Schaufelblattkomponente nach einem der vorhergehenden Ansprüche, wobei die Harzmatrix (10) ein ausgehärtetes syntaktisches Material umfasst.

5. Schaufelblattkomponente nach einem der vorhergehenden Ansprüche, wobei das oder jedes Paket (4) nicht weniger als 100 der Verstärkungsstäbe (8) umfasst.

6. Schaufelblattkomponente nach einem der vorhergehenden Ansprüche, wobei jeder Verstärkungsstab (8) mit einer Umwicklung (12) von Verstärkungsfasern in einer Harzmatrix versehen ist.

7. Schaufelblattkomponente nach einem der vorhergehenden Ansprüche, wobei jeder Verstärkungsstab (8) einen Hauptkörper umfasst, der mit einem Abstandsvorsprung zur Beabstandung der Hauptkörper benachbarter Stäbe (8) voneinander versehen ist.

8. Schaufelblattkomponente nach Anspruch 7, wobei der Vorsprung spiralförmig um die Längsachse des betreffenden Stabs (8) herum verläuft.

9. Schaufelblattkomponente nach einem der vorhergehenden Ansprüche, wobei das Stabpaket (4) oder die Pakete (4, 6) einen Kern (2) des Gegenstands bilden, der mit einer den Kern (2) umschließenden äußeren Hülle versehen ist.

10. Schaufelblattkomponente nach Anspruch 9, wobei die äußere Schicht Verstärkungsfasern in einer Harzmatrix aufweist.

11. Schaufelblattkomponente nach Anspruch 10, wobei die Fasern in Gewebelagen angeordnet sind.

12. Schaufelblattkomponenten nach Anspruch 11, wobei jede Gewebelage ein multiaxiales Kettengewirke ist.

13. Schaufelblattkomponente nach Anspruch 12, wobei das multiaxiale Kettengewirke Fasern umfasst, die mit +45°/90°/-45° mit Bezug auf die Längen der Stäbe orientiert sind.

14. Schaufelblattkomponente nach Anspruch 13, wobei das Flächengewicht der Fasern, die mit 90° orientiert sind, in der Längsrichtung der Stäbe variiert.

15. Verfahren zum Herstellen eines Gegenstands aus Kompositmaterial, wobei das Verfahren umfasst:
Zusammenfügen einer Mehrzahl von Verstärkungsstäben (8) in einem Paket (4), in welchem die Stäbe (8) parallel zueinander liegen, wobei jeder Stab (8) ein harzgebundenes Bündel von Verstärkungsfasern umfasst,
Imprägnieren des Pakets mit einer ersten abbindbaren oder aushärtbaren Zusammensetzung, und Bewirken oder Ermöglichen des Abbindens oder Aushärtens der Zusammensetzung zur Bildung einer Harzmatrix (10), in welcher die Stäbe (8) eingebettet sind,
Herstellen eines Fasermantels um das Paket zur Bildung einer Kernkomponente (4), Zusammensetzen eines Kerns (2) des Gegenstands, wobei der Kern aneinander stoßende Kernkomponenten (4, 6) aufweist,
Herstellen einer Faserverstärkung über dem Kern (2),
Platzieren des Kerns (2) mit der hergestellten Faserverstärkung in einer Form entsprechend der gewünschten Form des Gegenstands und
Zugeben einer zweiten abbindbaren oder aushärtbaren Zusammensetzung in die Form und Bewirken oder Ermöglichen des Abbindens oder Aushärtens der zweiten Zusammensetzung zwischen den Kernkomponenten, um dadurch einen Steg zwischen benachbarten Kernkomponenten zu bilden.

## Revendications

1. Composant à profil aérodynamique formé à partir d'un matériau composite, l'article comprenant des composants centraux juxtaposés (4, 6), dans lequel au moins un des composants centraux (4) comprend un groupe de tiges de renforcement (8) parallèles les unes par rapport aux autres et enrobées dans une matrice de résine (10), chaque tige (8) comprenant un faisceau de fibres de renforcement liées par une résine, **caractérisé en ce que** chaque composant central est enveloppé dans une enveloppe de fibres (12) pour former une bande (38) disposée entre les composants centraux adjacents.

2. Composant à profil aérodynamique selon la revendication 1, dans lequel la section en coupe de chaque tige (8) possède une dimension transversale qui n'est pas inférieure à 1,5 mm et qui n'est pas supérieure à 3,5 mm.

3. Composant à profil aérodynamique selon la revendication 1 ou la revendication 2, dans lequel les fibres de renforcement comprennent des fibres de carbone.

4. Composant à profil aérodynamique selon l'une quelconque des revendications précédentes, dans lequel la matrice de résine (10) comprend un matériau syntactique durci.

5. Composant à profil aérodynamique selon l'une quelconque des revendications précédentes, dans lequel le groupe (4) ou chaque groupe (4) comprend au moins 100 tiges de renforcement (8).

6. Composant à profil aérodynamique selon l'une quelconque des revendications précédentes, dans lequel chaque tige de renforcement (8) est pourvue d'un surenroulement (12) de fibres de renforcement dans une matrice de résine.

7. Composant à profil aérodynamique selon l'une quelconque des revendications précédentes, dans lequel chaque tige de renforcement (8) comprend un corps principal présentant une saillie d'espacement servant à former un espace entre les corps principaux des tiges (8) adjacentes.

8. Composant à profil aérodynamique selon la revendication 7, dans lequel la saillie est en forme de spirale autour de l'axe longitudinal de la tige (8) respective.

9. Composant à profil aérodynamique selon l'une quelconque des revendications précédentes, dans lequel le groupe (4) ou les groupes (4, 6) de tiges constituent une partie centrale (2) de l'article qui est pourvu d'une couche externe entourant la partie centrale (2).

10. Composant à profil aérodynamique selon la revendication 9, dans lequel la couche externe comprend des fibres de renforcement dans une matrice de résine.

11. Composant à profil aérodynamique selon la revendication 10, dans lequel les fibres sont disposées dans des couches de tissu.

12. Composant à profil aérodynamique selon la revendication 11, dans lequel chaque couche de tissu comprend un tricot multiaxial à mailles jetées.

13. Composant à profil aérodynamique selon la revendication 12, dans lequel le tricot multiaxial à mailles jetées comprend des fibres orientées à + 45 ° / 90 ° / - 45 ° par rapport aux longueurs des tiges.

14. Composant à profil aérodynamique selon la revendication 13, dans lequel le poids surfacique des fibres orientées à 90 ° varie dans la direction de la longueur des tiges.

15. Procédé de fabrication d'un article de matériau composite, le procédé comprenant :
l'assemblage d'une pluralité de tiges de renforcement (8) pour former un groupe (4) dans lequel les tiges (8) sont parallèles les unes aux autres, chaque tige (8) comprenant un faisceau de fibres de renforcement liées par une résine ;
l'imprégnation du groupe avec une première composition durcissable et le fait d'amener ou de permettre à la composition de durcir pour former une matrice de résine (10) dans laquelle les tiges (8) sont enrobées ;
la mise en place d'une enveloppe de fibres autour du groupe pour former un composant central (4) ;
l'assemblage d'une partie centrale (2) de l'article, la partie centrale comprenant des composants centraux juxtaposés (4, 6) ;
l'assemblage d'un renforcement à base de fibres sur la partie centrale (2) ;
le placement de la partie centrale (2) avec le renforcement à base de fibres assemblé dans un moule correspondant à la forme souhaitée de l'article ; et
l'introduction d'une seconde composition durcissable dans le moule et le fait d'amener ou de permettre à la seconde composition de durcir entre les composants centraux pour ainsi former une bande entre les composants centraux adjacents.
